## Europäisches Patentamt
## European Patent Office
## Office européen des brevets

(19)

(11) Veröffentlichungsnummer : **0 133 922**
**B1**

(12) **EUROPÄISCHE PATENTSCHRIFT**

(45) Veröffentlichungstag der Patentschrift :
28.09.88

(51) Int. Cl.⁴ : **B 60 B 27/00**

(21) Anmeldenummer : 84107817.3

(22) Anmeldetag : 05.07.84

(54) **Leichtbauradnabe.**

(30) Priorität : 17.08.83 CH 4476/83

(43) Veröffentlichungstag der Anmeldung :
13.03.85 Patentblatt 85/11

(45) Bekanntmachung des Hinweises auf die Patenterteilung : 28.09.88 Patentblatt 88/39

(84) Benannte Vertragsstaaten :
DE FR GB IT SE

(56) Entgegenhaltungen :
EP-A- 0 024 559
FR-A- 1 010 066
GB-A- 1 339 601
US-A- 2 781 231
A.T.Z. AUTOMOBILTECHNISCHE ZEITSCHRIFT, Band 84, Nr. 12, Dezember 1982, Seiten 619-623, Schwäbisch Gmünd, DE; F. MAHNIG et al.: "Gussteile in der Fahrzeugtechnik Bewährung im Leichtbau - Teil 2"

(73) Patentinhaber : GEORG FISCHER AKTIENGESELLS-CHAFT
Mühlentalstrasse 105
CH-8201 Schaffhausen (CH)

(72) Erfinder : Mahnig, Fritz
Forstweg 13
CH-8200 Schaffhausen (CH)
Erfinder : Baumann, Kurt
Oberstieg 33
C-8222 Beringen (CH)
Erfinder : Hofer, Ernst
Tannenstrasse 8
CH-8200 Schaffhausen (CH)

EP 0 133 922 B1

## Beschreibung

Die vorliegende Erfindung betrifft eine Leichtbauradnabe, für Lastwagen, Zugwagen, Auflieger und Autobusse, mit einem hülsenförmigen Nabenteil, je einem konzentrisch mit diesem angeordneten Speichenteil und Flanschteil, mit Auflageflächen im Flanschteil und Zentrierflächen an Zentriernocken wobei die Auflageflächen auf einer höheren Ebene liegen als der sie verbindende Flanschbereich und wobei der Speichenteil eine, in der Abwicklung eines Umfangsschnittes im wesentlichen wellenförmig verlaufende Wand aufweist. Eine derartige Nabe ist aus A.T.Z. Automobiltechnische Zeitschrift, Band 84, Nr. 12, Dez. 1982 Seiten 619-623 bekannt.

Bekannt sind auch Radnaben für hohe Belastungen, beispielsweise an Lastwagen, Schlepper, usw., die entweder geschmiedet, oder gegossen werden. Geschmiedete Radnaben sind relativ schwer und teuer in der Herstellung. Gegossene Radnaben wurden mit einer relativ dicken Wandstärke hergestellt, um der Radnabe eine ausreichende Festigkeit zu verleihen. Um bei Radnaben mit grosser Wandstärke Lunkerbildung zu verhindern, sind oft aufwendige giesstechnische Massnahmen zu berücksichtigen.

Aufgabe der vorliegenden Erfindung ist es, eine Leichtbauradnabe vorzuschlagen, die eine wesentliche Gewichtseinsparung bei gleichbleibenden Bauteilfestigkeitswerten ermöglicht. Andererseits soll die konstruktive Ausgestaltung der Nabe derart erfolgen, dass ein wesentlicher Teil des Bearbeitungsaufwandes eingespart wird.

Diese Aufgabe wird erfindungsgemäss durch die Lehre des kennzeichnenden Teiles des Anspruches 1 gelöst.

Weitere vorteilhafte Ausgestaltungen gehen aus den abhängigen Ansprüchen hervor.

Anhand der beigelegten Zeichnung wird eine bevorzugte Ausführungsform näher erläutert.

Es zeigen :
Fig. 1 einen Querschnitt durch eine Nabe,
Fig. 2 eine Ansicht der Nabe in Richtung B,
Fig. 3 eine Ansicht der Nabe in Richtung A.

Die Radnabe 1 ist einstückig gegossen und weist einen Nabenteil 2, einen Speichenteil 3 und einen Flanschteil 4 auf. Der Speichenteil 3 ist im wesentlichen durch kastenförmige Elemente gebildet, derart dass die Abwicklung eines Umfangschnittes durch den Speichenteil eine wellenförmig verlaufende Wand darstellt. Dank dieser Ausgestaltung ist es möglich, mit reduzierten Wandstärken, also weniger Gewicht, die notwendige Bauteilfestigkeit zu erreichen.

Der Flanschteil 4 weist Auflageflächen 4 a auf, in denen die Bohrungen 9 für die Radschrauben angeordnet sind. Zwischen je zwei Auflageflächen im Bereich eines Wellentales 7 ist die Flanschverbindung wulstförmig ausgebildet. Andererseits ist die Flanschverbindung zwischen je zwei Auflageflächen im Bereich eines Wellenberges 8 durch einen auslaufenden ebenen Bereich des Speichenteils gebildet. Eine Zentriernocke 6 ist im Bereich je eines Wellenberges 8 mittig zwischen je zwei Auflageflächen 4 a angeordnet. Die Zentriernocken 6 sind T-förmig ausgebildet.

Die Auflageflächen 4 a verbindenden Flanschbereiche liegen in einer tieferen Ebene als die Auflageflächen selber.

Bearbeitet werden die Auflageflächen und die senkrecht zu diesen angeordneten Zentriernockenfläche 6 a in einem Arbeitsgang. Dadurch, dass die Flanschbereiche zwischen den Auflageflächen 4 a zurückgesetzt sind, sind die zubearbeitenden Flächen untereinander nicht verbunden. Dadurch werden direkte Winkelübergänge (Kerben) in den bearbeitenden Bereichen vermieden, wodurch Rissbildungen wie sie in den Bereichen scharfer Kanten auftreten, ausgeschlossen sind. Ausserdem bringt diese Massnahme eine erhebliche Materialeinsparung mit sich.

Der Aussenrand des Flansches verläuft nicht kreisförmig, sondern aus Gründen der Materialeinsparung leicht wellenförmig. Dabei bestimmt der Radius $r_1$, der durch die Mitte der Befestigungslöcher 9 verläuft den zur Nabenachse näherliegenden Punkt des Flanschrandes.

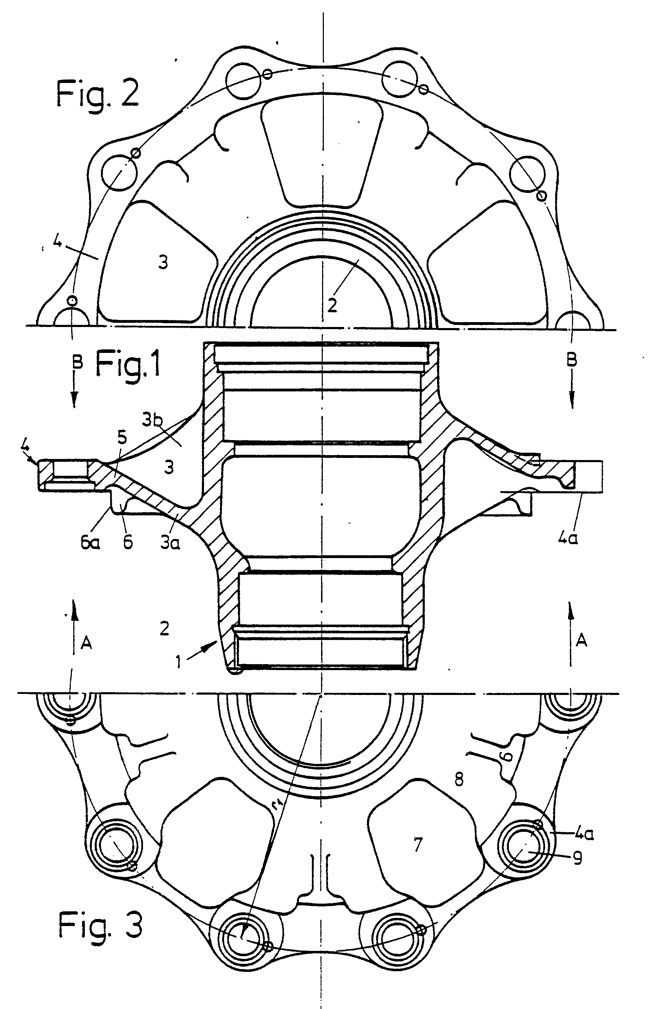

Die beschriebene Leichtbauradnabe weist eine besonders im Speichenteil eine Wandführung auf, die sich durch im wesentlichen unterschiedliche Wanddicken auszeichnet. Zusätzlich kann man in der Fig. 1 erkennen, dass die Wände 3a, 3b so angeordnet sind, dass sie sich in einer ebenen Schneide, die quer zur Nabenachse mittig durch den Flanschteil geht. Die Zentriernocken sind über diesem Schnittpunkt 5 angeordnet.

Die beschriebene Ausführung ermöglicht eine wesentliche Reduktion der Wanddicke, was zu einer beachtlichen Gewichtseinsparung führt. Ferner wird ein wesentlicher Bearbeitungsaufwand eingespart. Zusätzlich zu diesen Einsparungen kommen festigkeitsmässige Vorteile, die sich aus der Vermeidung von scharfen Kantenübergängen ergeben. Gesamthaft bietet die beschriebene Nabe wirtschaftliche Vorteile bei gleichbleibender Bauteilfestigkeit.

## Patentansprüche

1. Leichtbauradnabe, insbesondere für Lastwagen, Zugwagen, Auflieger und Autobusse, mit einem hülsenförmigen Nabenteil, je einem konzentrisch mit diesem angeordneten Speichenteil und Flanschteil mit Auflageflächen im Flanschteil (4) und Zentrierflächen an Zentriernocken wobei die Auflageflächen auf einer höheren Ebene liegen als der sie verbindende Flanschbereich und wobei der Speichenteil eine, in der Abwicklung eines Umfangsschnittes im wesentlichen wellenförmig verlaufende Wand aufweist, dadurch gekennzeichnet, dass Auflageflächen (4 a) und Zentrierungsflächen (6 a) in bearbeitetem Zustand voneinander getrennt sind.

2. Leichtbauradnabe, nach Anspruch 1, dadurch gekennzeichnet, dass die Auflageflächen (4 a) voneinander getrennt sind.

3. Leichtbauradnabe nach Anspruch 2, dadurch gekennzeichnet, dass die Wand des Speichenteiles flanschseitig zwischen je zwei Auflageflächen (6 a) abwechselnd wulstförmig bzw. eben ausläuft und den Flanschbereich zwischen je zwei Auflageflächen bildet.

4. Leichtbauradnabe nach Anspruch 3, dadurch gekennzeichnet, dass der wulstförmige Flanschbereich radseitig wegragt.

5. Leichtbauradnabe nach Anspruch 3, dadurch gekennzeichnet, dass zwischen je zwei Auflageflächen (4 a) im ebenen Flanschbereich eine Zentriernocke (6) an der Uebergangsstelle des Speichenteiles zum Flanschteil vorgesehen ist.

6. Leichtbauradnabe nach Anspruch 5, dadurch gekennzeichnet, dass die Zentriernocke (6) einen T-förmigen Vorsprung bildet.

7. Leichtbauradnabe nach Anspruch 1, dadurch gekennzeichnet, dass die wellenförmig verlaufende Wand des Speichenteiles den Festigkeitsanforderungen angepasste Wandstärken aufweist, wobei in Richtung der Nabenachse verlaufende Wandbereiche dünner sind.

8. Leichtbauradnabe nach Anspruch 1, dadurch gekennzeichnet, dass ein Kreis mit einem Radius $r_1$ mit Zentrum auf der Nabenachse durch den Mittelpunkt der Auflageflächen (4 a) verläuft und die kleinste Entfernung des Flanschrandes von der Nabenachse bestimmt.

9. Leichtbauradnabe nach einem der Ansprüche 1 bis 8, dadurch gekennzeichnet, dass sie aus Gusseisen mit Kugelgraphit oder Vermikulargraphit besteht.

10. Leichtbauradnabe nach einem der Ansprüche 1 bis 8, dadurch gekennzeichnet, dass sie aus einer Leichtmetallegierung gefertigt ist.

**Claims**

1. Lightweight wheel hub, in particular for heavy goods vehicles, tractors, semi-trailers and buses, with a sleeve-shaped hub portion, a spoke portion and a flange portion each arranged concentrically to it, having support surfaces in the flange portion (4) and centering surfaces on centering cams, wherein the support surfaces lie on a higher plane than the flange area joining them and wherein the spoke portion has a wall extending substantially in wave-like manner in the development of a circumferential section, characterised in that support surfaces (4a) and centering surfaces (6a) are separated from each other in the processed state.

2. Lightweight wheel hub according to claim 1, characterised in that the support surfaces (4a) are separated from each other.

3. Lightweight wheel hub according to claim 2, characterised in that the wall of the spoke portion on the flange side between two respective support surfaces (4a) extends alternately in a bead-shape and in a plane and forms the flange area between two respective support surfaces.

4. Lightweight wheel hub according to claim 3, characterised in that the bead-shaped flange area projects on the wheel side.

5. Lightweight wheel hub according to claim 3, characterised in that in the flat flange area between each pair of support surfaces (4a) there is provided a centering cam (6) at the point of transition from the spoke portion to the flange portion.

6. Lightweight wheel hub according to claim 5, characterised in that the centering cam (6) forms a T-shaped projection.

7. Lightweight wheel hub according to claim 1, characterised in that the wall of the spoke portion extending in wave-like manner has wall thicknesses adapted to the rigidity requirements, wall areas extending in the direction of the hub axis being thinner.

8. Lightweight wheel hub according to claim 1, characterised in that a circle with a radius $r_1$ with a centre on the hub axis extends through the centre point of the support surfaces (4a) and determines the smallest distance of the flange edge from the hub axis.

9. Lightweight wheel hub according to one of claims 1 to 8, characterised in that it is of cast iron with spheroidal graphite or vermicular graphite.

10. Lightweight wheel hub according to one of claims 1 to 8, characterised in that it is made of a light metal alloy.

**Revendications**

1. Moyeu de roue en construction légère, notamment pour des camions, des véhicules de traction, des semi-remorques et des cars, comprenant une partie-moyeu en forme de douille, une partie-rayons disposée de façon concentrique à la partie-moyeu, et une partie-bride ayant des faces d'appui sur la partie-bride (4) et des faces de centrage sur des nez de centrage, les faces d'appui se trouvant à un niveau supérieur à celui de la zone-bride qui les relie, et la partie-rayons possédant une paroi s'étendant sensiblement sous forme ondulée dans le développé d'une coupe périphérique, caractérise en ce qu'à l'état usiné les faces d'appui (4a) et les faces de centrage (6a) sont séparées les unes des autres.

2. Moyeu de roue en construction légère selon la revendication 1, caractérisé en ce que les faces d'appui (4a) sont séparées les unes des autres.

3. Moyeu de roue en construction légère selon la revendication 2, caractérisé en ce que la paroi de la partie-rayons se termine côté bride entre deux faces d'appui (6a) de façon alternée en forme de bourrelet ou plane et forme la zone-bride entre deux faces d'appui.

4. Moyeu de roue en construction légère selon la revendication 3, caractérisé en ce que la zone-bride en forme de bourrelet fait saillie côté roue.

5. Moyeu de roue en construction légère selon la revendication 3, caractérisé en ce qu'entre deux faces d'appui (4a) dans la zone-bride plane, il est prévu un nez de centrage (6) à l'endroit de raccordement de la partie-rayons à la partie-bride.

6. Moyeu de roue en construction légère selon la revendication 5, caractérisé en ce que le nez de centrage (6) forme une saillie en forme de T.

7. Moyeu de roue en construction légère selon la revendication 1, caractérisé en ce que la paroi ondulée de la partie-rayons possède des épaisseurs de paroi adaptées aux exigences de stabilité, des zones de paroi s'étendant dans le sens de l'axe du moyeu étant plus minces.

8. Moyeu de roue en construction légère selon la revendication 1, caractérisé en ce qu'un cercle de rayon $r_1$, centré sur l'axe du moyeu, passe par le centre des faces d'appui (4a) et détermine la distance la plus faible du bord de la bride de l'axe de moyeu.

9. Moyeu de roue en construction légère selon l'une quelconque des revendications 1 à 8, caractérisé en ce qu'il est en fonte à graphite sphéroïdal ou à graphite vermiculaire.

10. Moyeu de roue en construction légère selon l'une quelconque des revendications 1 à 8, caractérisé en ce qu'il est fabriqué en un alliage léger.

Fig. 2

Fig.1

Fig. 3